# EUROPEAN PATENT SPECIFICATION

(11) **EP 3 957 887 B1**
(45) Date of publication and mention of the grant of the patent: **29.03.2023**
(21) Application number: 20191547.7
(22) Date of filing: 18.08.2020
(51) Int. Cl.: F16K 27/06, A62C 35/68, A62C 37/50, F16K 31/60, F16K 35/02, F16K 11/20

(54) **MANIFOLD FOR A SPRINKLER SYSTEM**
VERTEILER FÜR EINE SPRINKLERANLAGE
COLLECTEUR DESTINÉ À UN SYSTÈME DE GICLEUR

(43) Date of publication of application: 23.02.2022
(73) Proprietor: RiserTeQ Limited, Chipping Norton OX7 5SR (GB)
(72) Inventor: FRANCIS, Thomas, Chipping Norton, Oxfordshire OX7 5SR (GB); COCKLIN, Christopher, Chipping Norton, Oxfordshire OX7 5SR (GB)
(74) Representative: Walther Bayer Faber Patentanwälte PartGmbB

(56) References cited:
- DE-U1- 29 513 147
- JP-A- 2002 039 430
- US-A1- 2003 038 267
- US-A1- 2008 314 466
- MARTIN READ: "Residential fire sprinkler systems: myths busted part 1", , 16 May 2017 (2017-05-16), XP002801611, Retrieved from the Internet: URL:https://www.appeng.co.uk/blog/resident ial-fire-sprinkler-systems-myths-busted-pa rt-1/ [retrieved on 2021-01-13]
- Riser Rapidrop Global Ltd: "Data Sheet 7.05 Issue B - Residential and Domestic Alarm and Test Valve Assembly", , 30 October 2017 (2017-10-30), XP055764423, Retrieved from the Internet: URL:https://www.rapidrop.com/media/4552/70 5-b-ds-rdresivalveset-residential-domestic -alarm-test-valve-assembly-bs9251-2014.pdf [retrieved on 2021-01-13]

## Description

The present invention relates to a manifold for a sprinkler system, in particular performed for the arrangement in the main supply tubing of the sprinkler system, having a main tube body with an inlet port at a first end and with an outlet port at a second end, and having a main tube ball valve to open and close a main passage extending along a main axis in the main tube body by turning the valve in a valve axis, and whereas the main tube ball valve features a handle for turning the valve.

### PRIOR ART

A manifold to which the present invention is directed to is known from US 2019/0301625 A1, which discloses an embodiment of a manifold for a sprinkler system, which is performed to be arranged in the main supply tubing of a sprinkler system, as shown for example in US 2004/0000337 A1, where an installation cabinet is provided to receive the tubing and thus to receive the manifold, to which the present invention is directed to.

The main features of the manifold are a main tube body having an inlet port at a first end and having an outlet port at a second end, and in between the first end and the second end a main flow passage for sprinkler water is formed, which is supplied to a number of sprinkler outlets e.g. within a building. The manifold forms a main part of a sprinkler system with a main tube ball valve to open and close the main passage extending along a main axis of the manifold, which is formed as ball valve and the manifold forms a monitoring installation for the case of a water flow, and when at least one of the sprinkler nozzles opens, e.g. in the case of fire, water flows through the main passage along the main axis, which water flow is monitored by means of a flow alarm unit. In case of a water flow, e.g. an alarm system in the building can be activated.

Moreover, for the purpose of a continuous regular service, the manifold features a test outlet port for a temporary test drain of water flowing through the main passage of the main tube body and the test outlet port, and at least one pressure gauge is arranged to the main tube body for a permanent visualisation of water pressure in the main passage of the main tube body, in order to visually control the standby mode of the sprinkler system.

MARTIN READ: "Residential fire sprinkler systems: myths busted part 1", 16. May 2017, XP002801611 discloses a manifold for a sprinkler system, in particular performed for the arrangement in the main supply tubing of the sprinkler system, having a main tube body with an inlet port at a first end and with an outlet port at a second end, and having a main tube valve having a ball body to open and close a main passage extending along a main axis in the main tube body by turning the ball body about a valve axis.

RISER RAPIDROP Global Ltd.: "Data Sheet 7.05 Issue B - Residential and Domestic Alarm and Text Valve Assembly", XP 055764423 discloses another manifold having a handle for operating a main tube valve, and the handle features enlarged dimensions when the handle is operated.

In order to integrate manifolds of sprinkler systems according to the above described type, the manifold must be installed within an installation cabinet as shown in the US 2004/0000337 A1. For this purpose it is desirable that the manifold forms a compact design and the main tube ball valve should be arranged within the housing in such a way that the valve can be opened and closed from the front side in an easy manner by means of a special designed handle.

### DISCLOSURE OF INVENTION

Accordingly, it is an object of present invention to provide a manifold for a sprinkler system which is small and compact in its design, and the manufacturing of the manifold should be as simple as possible and the manifold should feature valves which are arranged in an advantageously manner. According to another advantage, the main body of the manifold should feature a high degree of integration.

This object is achieved by a manifold as taught by claim 1 of the present invention. Advantageous embodiments of the manifold are defined in the sub claims.

The invention discloses the technical teaching that beginning with the inlet port at the first end along the main axis the main tube body of the manifold features the following integral components: the main tube ball valve comprising the handle, at least one flow alarm port extending in a flow alarm port axis for the arrangement of a flow alarm unit, a test outlet port extending an a test outlet port axis comprising an test outlet ball valve and a pressure measuring port extending in a pressure measuring port axis for the arrangement of a pressure gauge, whereas the flow alarm port axis and the valve axis extend parallel to each other and the test outlet port axis and the pressure measuring port axis extend parallel to each other.

In this sequential arrangement along the main axis of the main tube body with regard to the different parts and members of the manifold a maximal packaging is achieved and the manifold features a shortened overall length, in particular due to the extension directions of the different axis.

Preferably the flow alarm port axis and the valve axis extend perpendicular to the test outlet port axis and the pressure measuring port axis. Accordingly, two main members of the manifold extend in a first direction, and another two main members of the manifold extend perpendicular to the first main members of the manifold, in particular relating to the axis of each of the members. This arrangement leads to a minimum space need of the entire manifold with the high number of features. The perpendicular extension of the axis one to another encloses an angle of 90° around the main axis of the main tube body.

The main tube body can advantageously be manufactured by a moulding process, whereas a moulding seam defines a moulding plane, and the test outlet port axis and the pressure measuring port axis are lying in the moulding plane. Accordingly, the flow alarm port axis and the valve axis extend perpendicular to the moulding plane, which is defined by the moulding seam. This leads to the advantage that the main tube body of the manifold with all integrated members can be moulded in only one moulding tool.

According to the present invention at least the main tube ball valve and the test outlet ball valve are performed as ball valves, whereas the ball bodies of the ball valves are received between two half casings. Such ball valves are operable with a rotation of only 90° of its handle, to turn the ball body between the opened and closed state. Usually the ball bodies of the ball valves are received between two half casings which are space saving and easy to operate.

In conjunction with the valve bodies formed as ball bodies it is another advantage of the invention that a first half casing is formed integrated in the main tube body and a second half casing is formed integrated in a valve casing part which is screwed on the main tube body by means of a screw connection. By means of the integration of the first half casing in the main tube body for at least one of the valves the main tube body is featured with more functions and has an enhanced integration density.

The first end and the second end of the main tube body are preferably formed by bonnet elements, whereas the second half casing of the first main tube ball valve forms a first bonnet element and second bonnet element forms the second end as an one piece construction with the second half cases. The bonnet elements feature internal screw threads for connecting pipes to the inlet port and the outlet port, in which the manifold can be integrated.

According to another main aspect of the invention the handle for operating the main tube ball valve features a first leg extending perpendicular or angled to the valve axis and the handle features a second leg extending perpendicular or angled to the first leg and perpendicular to the valve axis.

This advantageous design of the handle arranged to the manifold as described above does not limit the main geometrical measuring of the entire manifold, in particular in the opened state of the main tube ball valve, which is the state of the handle in use of the manifold.

In this sense the handle of the manifold features two legs with an approximately 90° angle in between the two legs, and according to another advantage the handle is formed by means of a flat sheet metal and the approximately 90° angle is made by bending in between the legs of the handle, which is formed in the flat sheet metal. The flat sheet metal is arranged to a stem element of the main tube ball valve and secured to the stem element by means of a nut. This first leg extends between the valve stem element and the second leg, whereas the second leg is the leg which can be operated by the hand of a user.

When the main tube ball valve is in the open state, the second leg extends parallel to the main axis of the main tube body. This leads to an advantage because the open state of the main tube ball valve is the permanent standard state of the valve, in which the doors of the installation cabinet can be closed. When the main tube ball valve is in the closed state, the second leg extends perpendicular to the main axis of the main tube body, and e.g. in this usually temporary state the doors of the installation cabinet in which the manifold is installed cannot be closed.

The first leg extends perpendicular to the main axis when the main tube ball valve is in the open state. This leads to the advantage that a main part of the handle does not disturb the arrangement of the flow alarm unit arranged to the flow alarm port.

According to yet another advantage of the present invention the dimensions of the handle are formed in such a way that the handle does not extend beyond the first end of the main tube body, neither in the open nor in the closed position of the main tube ball valve. This allows a bottom near installation of the manifold within the installation cabinet.

Advantageously, a locking element is displaceable arranged on the first leg, whereas in the open position of the main tube ball valve the locking element is in a position to interact which a ridge or a notch being arranged in the outer contour of the main tube body. This ensures the main tube ball valve maintaining in the open position, and an undesired closing of the main tube ball valve is prevented at any time. When a user wants to change the main tube ball valve from the open into the closed state, the user must release the locking element out of the ridge or the notch, e.g. by the movement of a finger, and only when the locking element is released, the state of the main tube ball valve can be changed from the opened to the closed state.

The flow alarm port preferably features a length that the flow alarm unit can be arranged adjacent to the main tube ball valve and adjacent to the handle which is arranged to the main tube ball valve, and the handle can be operated between the opened and closed position of the main tube ball valve while the presence of the flow alarm unit does not handicap the operating of the main tube ball valve handle. This is only achieved by the claimed design of the manifold. And when the pressure measuring port forms the last main part adjacent to the outlet port at the second end of the main tube body, the outlet port can be arranged directly to a bonnet element having an internal screw thread forming the outlet port itself, because the diameter of the pressure gauge is usually greater than the diameter of the pressure measuring port. In other words, a part of the pressure gauge can extend in a height over the length of the main tube body which is congruent to the position of the bonnet.

According to yet another aspect of the invention the main tube ball valve is arranged in a distance to the first end of the main tube body and/or the first leg of the handle features a length in such a way that the handle does not stand beyond the first end of the main tube body, neither in the open state nor in the closed state of the main tube ball valve. This leads to the advantage that with the first end of the main tube body the necessary space for integrating the manifold in the installation cabinet is reduced and an inner wall of the cabinet can limit the integration space for the manifold with the arrangement of the first end of the main tube body.

The special sequential arrangement of all these features named above lead to small dimensions of an enveloping body of the manifold, and the necessary space for arranging the manifold in particular within an installing cabinet is optimized. Thus, the dimensions of an enveloping body of the manifold are at least defined by the first end and the second end of the main tube body, the flow alarm unit and the butterfly handle of the first outlet valve and a sealing cover of the test outlet port. These features form the limitations of the enveloping body of the manifold.

The aforementioned components as well as the claimed components and the components to be used in accordance with the invention in the described embodiments, are not subject to any special exceptions with respect to their size, shape, material selection and technical concept such that the selection criteria known in the pertinent field can be applied without limitations.

### PREFERRED EMBODIMENT OF THE INVENTION

Additional details, characteristics and advantages of the object of the invention are disclosed in the sub claims and the following description of the respective figures, which show in an exemplary manner a preferred embodiment of a manifold according to the invention. The following figures describe:
- Fig. 1: an exploded view of a manifold according to the invention,
- Fig. 2a: a sectional view of the manifold with opened valves,
- Fig. 2b: the manifold according to Fig. 2a in a perspective, in which the manifold is turned 90° in the main axis,
- Fig. 3a: a sectional view of the manifold with closed valves and
- Fig. 3b: the manifold according to Fig. 3a in a perspective, in which the manifold is turned 90° in the main axis.

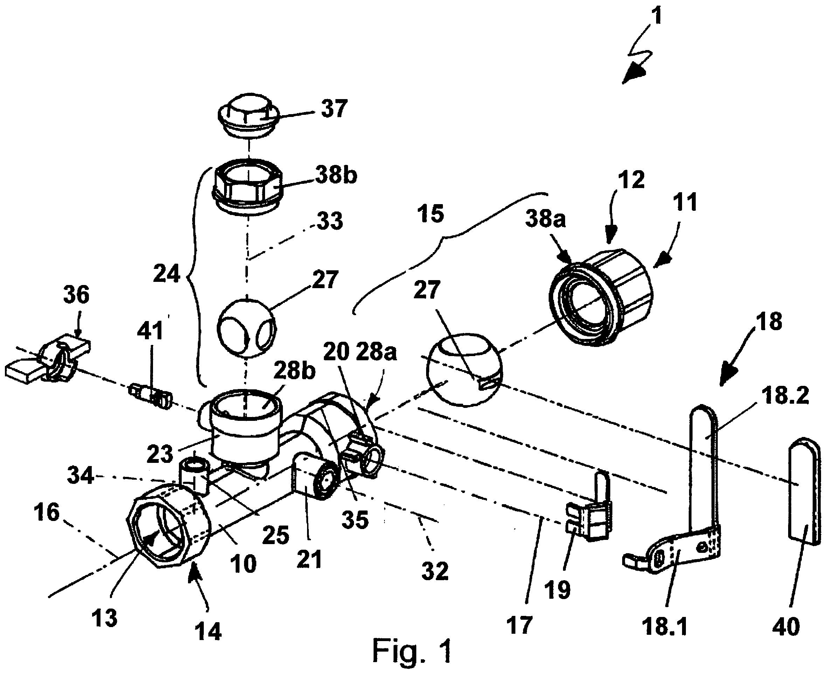

In fig. 1 is shown an embodiment of a manifold 1 according to the invention view, whereas the depiction does not show all detailed parts of the manifold, and the shown parts form direct or indirect at least a feature of the invention.

The manifold 1 features a main tube body 10 having an inlet port 11 at a first end 12 and having an outlet port 13 at a second end 14. The main tube body 10 features a main tube ball valve 15 to open and close an inner main passage extending a long main axis 16 in the main tube body 10, and the main tube ball valve 15 can be operated by a handle 18 to turn a ball body 27 of the main tube ball valve 15 between an opened and a closed state of the main tube ball valve 15.

Next to the position of the main tube ball valve 15, a flow alarm port 21 is arranged in the main tube body 10, and a flow alarm unit is mounted to the flow alarm port 21, which flow alarm unit is not shown in fig. 1.

Next to the flow alarm port 21, the main tube body 10 features a test outlet port 23 with a test outlet ball valve 24, and the test outlet ball valve 24 can be operated by means of a butterfly handle 36, which is mounted to a valve stem 41 as a part of the test outlet ball valve 24.

Next to the position of the test outlet port 23 the main tube body 10 features a pressure measuring port 25.

The listed features above are positioned in or at the main tube body 10 between the first end 12 and the second end 14.

The inlet port 11 is formed as a bonnet element 38a, and when the bonnet element 38a is arranged at the main tube body 10, the ball body 27 of the main tube ball valve 15 is received between the bonnet element 38a and the main tube body 10.

In order to form the test outlet ball valve 24, a bonnet element 38b is arranged to a half casing 28b, which is formed integral in the test outlet port 23, and the ball body 27 of the test outlet ball valve 24 is received between the bonnet element 38b and the half casing 28b, when the bonnet element 38b is arranged at the test outlet port 23.

The handle 18 of the main tube ball valve 15 features a first leg 18.1 extending perpendicular to the valve axis 17 of the main tube ball valve 15, and the handle 18 features a second leg 18.2 extending perpendicular to the first leg 18.1 and perpendicular to the valve axis 17. A cover 40 is arranged on the second leg 18.2 to improve the haptic of the handle 18 for a user.

In order to rest the main tube ball valve 15 in the open position, a locking element 19 is arranged to the handle 18, in particular movable arranged on the first leg 18.1 of the handle 18. In the lower position the locking element 19 engages into a ridge 20, which is formed in a valve dome of the main tube body 10, and when a user intends to close the main tube ball valve 15, the locking element 19 must be retracted e.g. by a finger moving of the user, to disengage the locking element 19 with the ridge 20. After the disengagement, the handle 18 can be tilted in the valve axis 17 and the state of the main tube ball valve 15 can be changed over from the opened position to the closed position.

The test outlet ball valve 24 is shown with a valve stem 41, and the butterfly handle 36 is arranged on the outer end of the valve stem 41. The valve stem 41 engages into the ball body 27 of the test outlet ball valve 24, and to cover the test outlet port 23 independent of the position of the test outlet ball valve 24, a sealing cover 37 is screwed into the opening of the bonnet element 38b and is only removed for test purposes when the test outlet ball valve 24 is opened and drain water flows through the test outlet port 23.

The test outlet port axis 33 extends parallel to the pressure measuring port axis 34. The test outlet port axis 33 and the pressure measuring port axis 34 form a plane, and in this plane a moulding seam 35 of the main tube body 10 is arranged, which moulding seam 35 rises in the forging process for manufacturing the main tube body 10. In other words, the moulding seam 35 forms a plane with an orientation, in which the test outlet port axis 33 and the pressure measuring port 34 are integrated. This leads to the advantage that the half casing 28b of the test outlet port 23 for receiving the ball body 27 of the test outlet ball valve 24 is formed direct in the moulding process while the moulding seam 35 divides the test outlet port 23 into imaginary half parts. This leads to an improved manufacturing process, and only a cutting machining process is necessary to finish the half casing 28b.

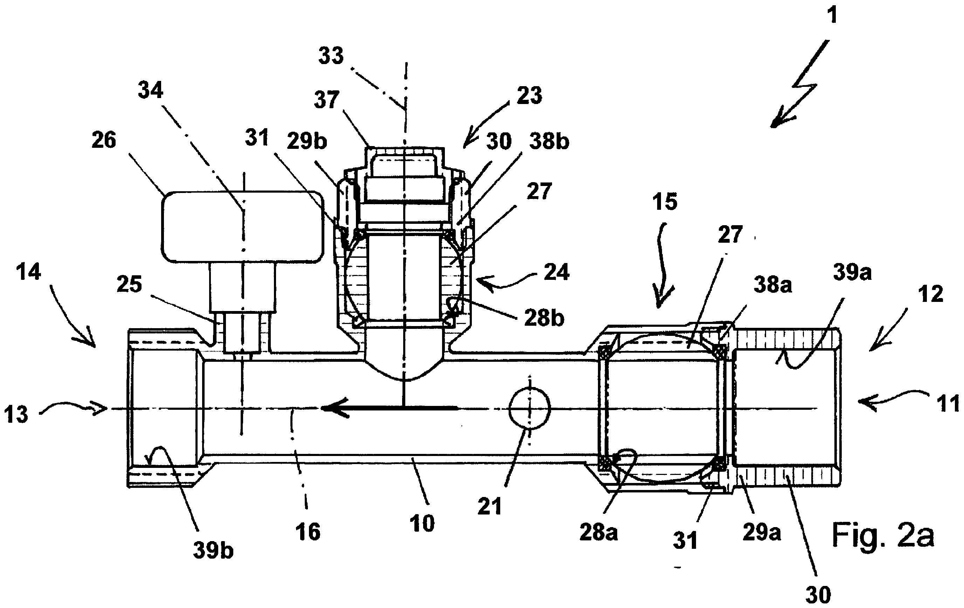

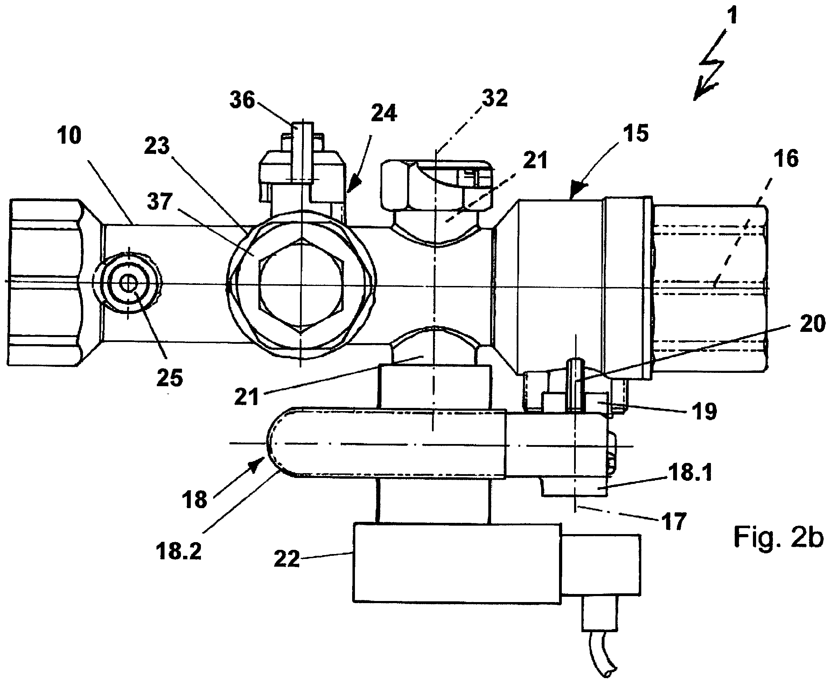

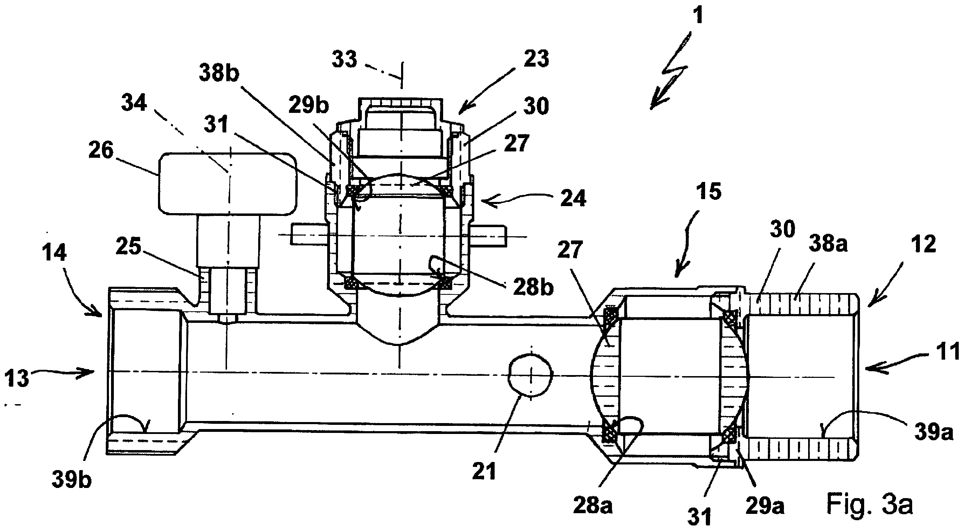

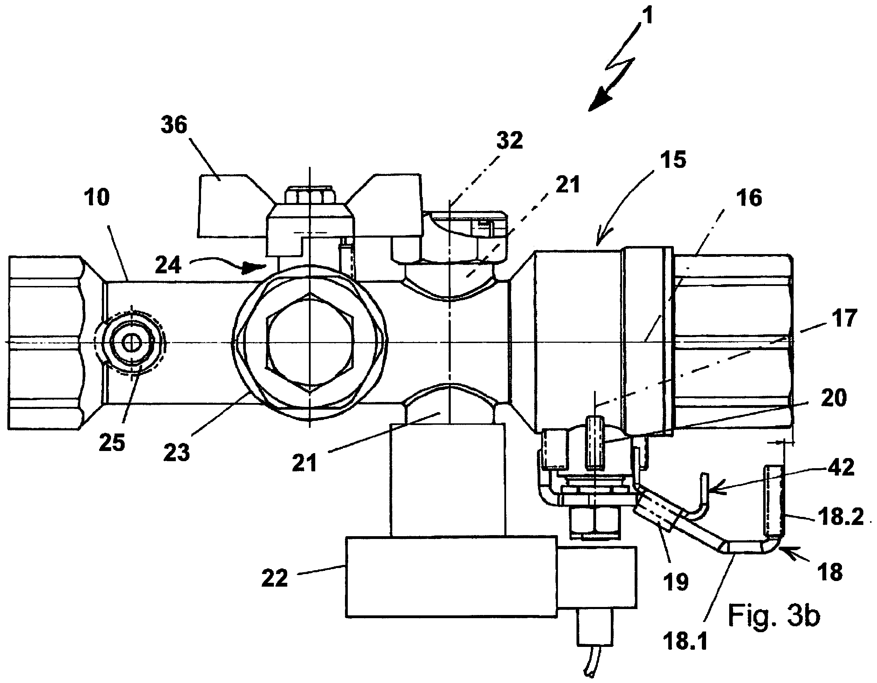

The figures 2a and 2b and the figures 3a and 3b respectively show the manifold 1 in a first view and in a second view, whereas the first view and second view are tilted 90° to each other in the main axis 16 of the manifold 1. Fig. 2a and 2b show the manifold 1 with opened valves 15 and 24, and fig. 3a and 3b show the manifold 1 with closed valves 15 and 24.

Fig. 2a and fig. 3a show the manifold 1 in a cross sectioned view with the main tube body 10, whereas the cross section as shown relates to the plane of the moulding seam 35 according to fig. 1. The main tube ball valve 15 and the test outlet ball valve 24 are in an opened position in fig. 2a and in a closed position in fig. 3a.

Regardless the reference numbers which are already explained in conjunction with fig. 1 and are also shown in fig. 2a and 3a, fig. 2a and fig. 3a show the pressure gauge 26 which is arranged to the pressure measuring port 25, and the pressure measuring port 25 is arranged next to the test outlet ball valve 24. The depiction shows that the test outlet port axis 33 extends parallel to the pressure measuring port axis 34.

The ball body 27 of the test outlet ball valve 24 is received between the half casing 28b formed as a part of the main tube body 10 and the half casing 29b, which is formed as the bonnet element 38b. The sealing cover 37 of the test outlet port 23 is screwed onto the valve casing part 30, which is one piece-formed with the half casing 29b, which part also forms the bonnet element 38b.

With respect to the main tube ball valve 15, the valve casing part 30 forms the bonnet element 38a which also forms the half casing 29a for receiving the ball body 27 of the main tube ball valve 15.

The flow direction of the water within the main tube body 10 flows along the shown arrow, whereas the open state of the test outlet ball valve 24 is only shown in an exemplary fashion, and when test drain water is released with the test outlet ball valve 24, the sealing cover 37 is removed.

In order to integrate the main tube body 10 into a tubing of a sprinkler system, the bonnet element 38a features an internal screw thread 39a and the outlet port 13 features another internal screw thread 39b, whereas into the screw threads 39a and 39b are screwed counter-threads of the -not shown- tubing.

Fig. 2b and fig. 3b show the manifold 1 in a perspective, which is 90° tilted in the main axis 16 to the perspective of fig. 2a and fig. 3a. In this tilted position it is shown that the valve axis 17 and the flow alarm port axis 32 extend parallel to each other, and thus these both axes 17 and 32 extend perpendicular to the extension of the test outlet port axis 33 and the pressure measuring port axis 34 as shown in fig. 2a and fig. 3a.

Furthermore, fig. 2b and fig. 3b show a flow alarm unit 22 which is arranged to the flow alarm port 21. Fig. 2b shows the main tube ball valve 15 and the test outlet ball valve 24 in a closed state, wherein in fig. 3b the main tube ball valve 15 and the test outlet ball valve 24 are shown in an opened position.

A comparison of the handle 18 of the main tube ball valve 15 in the opened position according to fig. 2b and in the closed position according to fig. 3b, it appears that the second leg 18.2 of the handle 18 extends parallel to the main axis 16 in the opened position (fig. 2b) and extends perpendicular to the main axis 16 in the closed position, see fig. 3b.

In fig. 2b the handle 18 is well integrated between the flow alarm unit 22 and the main tube body 10, and in the closed state of the main tube ball valve 15 the second leg 18.2 of the handle 18 does not extend beyond the outer end of the main tube body 10.

The present invention is not limited by the embodiment described above, which is represented as an example only and can be modified in various ways within the scope of protection defined by the pending patent claims.

### List of Numerals:

- 1: manifold

- 10: main tube body
- 11: inlet port
- 12: first end
- 13: outlet port
- 14: second end
- 15: main tube ball valve
- 16: main axis
- 17: valve axis
- 18: handle
- 18.1: first leg
- 18.2: second leg
- 19: locking element
- 20: ridge
- 21: flow alarm port
- 22: flow alarm unit
- 23: test outlet port
- 24: test outlet ball valve
- 25: pressure measuring port
- 26: pressure gauge
- 27: ball body
- 28a: half casing
- 28b: half casing
- 29a: half casing
- 29b: half casing
- 30: valve casing part
- 31: screw connection
- 32: flow alarm port axis
- 33: test outlet port axis
- 34: pressure measuring port axis
- 35: moulding seam
- 36: butterfly handle
- 37: sealing cover
- 38a: bonnet element
- 38b: bonnet element
- 39a: internal screw thread
- 39b: internal screw thread
- 40: cover
- 41: valve stem
- 42: finger hook

## Claims

1. Manifold (1) for a sprinkler system, in particular performed for the arrangement in the main supply tubing of the sprinkler system, having a main tube body (10) with an inlet port (11) at a first end (12) and with an outlet port (13) at a second end (14), and having a main tube ball valve (15) with a ball body (27) to open and close a main passage extending along a main axis (16) in the main tube body (10) by turning the ball body (27) about a valve axis (17), and whereas the main tube ball valve (15) features a handle (18) for turning the ball body (27) of the valve (15),
**characterized in that**,
beginning with the inlet port (11) at the first end (12) along the main axis (16),
the main tube body (10) features the following integral components in the following sequence:
- the main tube ball valve (15) comprising the handle (18),
- at least one flow alarm port (21) extending in a flow alarm port axis (32) for the arrangement of a flow alarm unit (22),
- a test outlet port (23) extending in a test outlet port axis (33) comprising a test outlet ball valve (24) with a ball body (27) and
- a pressure measuring port (25) extending in a pressure measuring port axis (34) for the arrangement of a pressure gauge (26), whereas
- the flow alarm port axis (32) and the valve axis (17) extend parallel to each other and
- the test outlet port axis (33) and the pressure measuring port axis (34) extend parallel to each other, wherein
- the ball bodies (27) of the ball valves (15, 24) are received between two half casings (28a, 28b, 29a, 29b).

2. Manifold (1) according to claim 1,
**characterized in that**
the flow alarm port axis (32) and the valve axis (17) extend perpendicular to the test outlet port axis (33) and the pressure measuring port axis (34).

3. Manifold (1) according to claim 1 or 2,
**characterized in that**
the main tube body (10) is manufactured by a moulding process, whereas a moulding seam (35) forms a moulding plane, whereas the test outlet port axis (33) and the pressure measuring port axis (34) are lying in the moulding plane.

4. Manifold (1) according to one of the claims 1 to 3,
**characterized in that**
a first half casing (28a, 28b) is formed integrated in the main tube body (10) and a second half casing (29a, 29b) is formed integrated in a valve casing part (30) which is screwed on the main tube body (10) by means of a screw connection (31).

5. Manifold (1) according to claim 4,
**characterized in that**
the second half casings (29a, 29b) form bonnet elements (38a, 38b) which feature internal screw threads (39a, 39b) for connecting
a pipe to the inlet port (11) and the outlet port (13).

6. Manifold (1) according to one of the foregoing claims,
**characterized in that**
the handle (18) features a first leg (18.1) extending perpendicular or angled to the valve axis (17) and that the handle (18) features a second leg (18.2) extending perpendicular or angled to the first leg (18.1) and perpendicular or angled to the valve axis (17).

7. Manifold (1) according to claim 6,
**characterized in that**
the second leg (18.2) extends parallel to the main axis (16) when the main tube ball valve (15) is in the open state.

8. Manifold (1) according to claim 6 or 7,
**characterized in that**
the first leg (18.1) extends perpendicular to the main axis (16) when the main tube ball valve (15) is in the open state.

9. Manifold (1) according to one of the foregoing claims,
**characterized in that**
the dimensions of the handle (18) are formed in such a way that the handle (18) does not extend beyond the first end (12) of the main tube body (10), neither in the open nor in the closed position of the main tube ball valve (15).

10. Manifold (1) according to one of the claim 6 to 9,
**characterized in that**
a locking element (19) is displaceable arranged on the first leg (18.1), whereas in the opened position of the main tube ball valve (15) the locking element (19) is in a position to interact with a ridge (20) or a notch being arranged in the outer contour of the main tube body (10) to ensure the main tube ball valve (15) maintaining in the opened position.

11. Manifold (1) according to one of the claim 6 to 10,
**characterized in that**
the main tube ball valve (15) is arranged in a distance to the first end (12) of the main tube body (10) and/or the first leg (18.1) of the handle (18) features a length in such a way that the handle (18) does not extend beyond the first end (12) of the main tube body (10), neither in the open state nor in the closed state of the main tube ball valve (15).

## Patentansprüche

1. Verteiler (1) für eine Sprinkleranlage, insbesondere für die Anordnung in der Hauptversorgungsrohrleitung der Sprinkleranlage ausgeführt, mit einem eine Einlassöffnung (11) an einem ersten Ende (12) und eine Auslassöffnung (13) an einem zweiten Ende (14) aufweisenden Hauptrohrkörper (10) und mit einem einen Kugelkörper (27) aufweisenden Hauptrohrkugelventil (15) zum Öffnen bzw. Schließen eines entlang einer Hauptachse (16) in den Hauptrohrkörper (10) verlaufenden Hauptkanals durch ein Verdrehen des Kugelkörpers (27) um eine Ventilachse (17), und während das Hauptrohrkugelventil (15) einen Griff (18) zum Verdrehen des Kugelkörpers (27) des Ventils (15) aufweist,
**dadurch gekennzeichnet, dass**
ausgehend von der Einlassöffnung (11) am ersten Ende (12) entlang der Hauptachse (16)
weist der Hauptrohrkörper (10) die nachfolgenden Integralbestandteile in der folgenden Reihenfolge auf:
- das den Griff (18) umfassende Hauptrohrkugelventil (15),
- mindestens eine in einer Flussalarmöffnungsachse (32) zur Anordnung einer Flussalarmeinrichtung (22) verlaufende Flussalarmöffnung (21),
- eine in eine Prüfauslassöffnungsachse (33) verlaufende, ein Prüfauslassventil (24) mit einem Kugelkörper (27) aufweisende Prüfauslassöffnung (23), und
- eine in eine Druckmessöffnungsachse (34) zur Anordnung eines Druckmessgeräts (26) verlaufende Druckmessöffnung (24), während
- die Flussalarmöffnungsachse (32) und die Ventilachse (17) parallel zueinander verlaufen und
- die Prüfauslassöffnungsachse (33) und die Druckmessöffnungsachse (34) parallel zueinander verlaufen und
- die Kugelkörper (27) der Kugelventile (15, 24) zwischen zwei Halbgehäusen (28a, 28b, 29a, 29b) aufgenommen sind.

2. Verteiler (1) nach Anspruch 1,
**dadurch gekennzeichnet, dass**
die Flussalarmöffnungsachse (32) und die Ventilachse (17) senkrecht zur Prüfauslassöffnungsachse (33) und zur Druckmessöffnungsachse (34) verlaufen.

3. Verteiler (1) nach Anspruch 1 oder 2,
**dadurch gekennzeichnet, dass**
der Hauptrohrkörper (20) mit einem Formverfahren hergestellt werden, während eine Gießnaht eine Gießformebene definiert, während die Prüfauslassöffnungsachse (33) sowie die Druckmessöffnungsachse (34) in der Gießformebene liegen.

4. Verteiler (1) nach einem der Ansprüche 1 bis 3,
**dadurch gekennzeichnet, dass**
ein erstes Halbgehäuse (28a, 28b) integriert in den Hauptrohrkörper (10) und ein zweites Halbgehäuse (29a, 29b) integriert in ein Ventilgehäuseteil (30), das mittels einer Schraubverbindung (31) an dem Hauptrohrkörper (10) geschraubt wird, ausgebildet werden.

5. Verteiler (1) nach Anspruch 4,
**dadurch gekennzeichnet, dass**
die zweiten Halbgehäuse (29a, 29b) Haubenelemente (38a, 38b) bilden, die innere Schraubgewinde (39a, 39b) zur Verbindung eines Leitungsrohrs mit der Einlassöffnung (11) und der Auslassöffnung (13) aufweisen.

6. Verteiler (1) nach einem der vorhergehenden Ansprüche,
**dadurch gekennzeichnet, dass**
der Griff (18) einen ersten senkrecht bzw. abgewinkelt zur Ventilachse (17) verlaufenden Schenkel (18.1) aufweist und der Griff (18) einen zweiten senkrecht bzw. abgewinkelt zum ersten Schenkel (18.1) und senkrecht bzw. abgewinkelt zur Ventilachse (17) verlaufenden zweiten Schenkel (18.2) aufweist.

7. Verteiler (1) nach Anspruch 6,
**dadurch gekennzeichnet, dass**
bei geöffnetem Hauptrohrkugelventil (15) sich der zweite Schenkel (18.2) parallel zur Hauptachse (16) erstreckt.

8. Verteiler (1) nach Anspruch 6 oder 7,
**dadurch gekennzeichnet, dass**
bei geöffnetem Hauptrohrkugelventil (15) sich der erste Schenkel (18.1) senkrecht zur Hauptachse i(16) erstreckt.

9. Verteiler (1) nach einem der vorhergehenden Ansprüche,
**dadurch gekennzeichnet, dass**
die Abmessungen des Griffs (18) so ausgebildet sind, dass sich der Griff (18) weder im geöffneten noch im geschlossenen Zustand des Hauptrohrkugelventils (15) nicht über das erste Ende (12) des Hauptrohrkörpers (10) erstreckt.

10. Verteiler (1) nach einem der Ansprüche 6 bis 9,
**dadurch gekennzeichnet, dass**
ein Verriegelungselement (1) am ersten Schenkel (18.1) verschiebbar angeordnet ist, während in der geöffneten Stellung des Hauptrohrkugelventils (15) das Verriegelungselement (19) in der Lage ist, mit einer Erhebung (20) bzw. einer Einkerbung zusammenzuwirken, die in der Außenkontur des Hauptrohrkörpers (10) angeordnet sind, um sicherzustellen, dass das Hauptrohrkugelventil (15) in der geöffneten Stellung verbleibt.

11. Verteiler (1) nach einem der Ansprüche 6 bis 10,
**dadurch gekennzeichnet, dass**
das Hauptrohrkugelventil (15) in einem Abstand zum ersten Ende (12) des Hauptrohrkörpers (10) angeordnet ist bzw. der erste Schenkel (18.1) des Griffs (28) derart eine Länge aufweist, dass sich der Griff (18) weder in dem geöffneten noch in dem geschlossenen Zustand des Hauptrohrkugelventils (15) nicht über das erste Ende (12) des Hauptrohrkörpers (10) hinaus erstreckt.

## Revendications

1. Collecteur (1) destiné à un système de gicleurs, en particulier exécuté pour être agencé dans la tuyauterie d'alimentation principale du système de gicleurs, comportant un corps de tube principal (10) avec un orifice d'entrée (11) à une première extrémité (12) et avec un orifice de sortie (13) à une seconde extrémité (14), et comportant un robinet à tournant sphérique de tube principal (15) doté d'un corps sphérique (27) destiné à ouvrir et fermer un passage principal s'étendant le long d'un axe principal (16) dans le corps de tube principal (10) par la rotation du corps sphérique (27) autour d'un axe de robinet (17) et tandis que le robinet à tournant sphérique de tube principal (15) présente une poignée (18) destinée à faire tourner le corps sphérique (27) du robinet (15), **caractérisé en ce que**
en partant de l'orifice d'entrée (11) situé à la première extrémité (12), le long de l'axe principal (16), le corps de tube principal (10) présente les composants à part entière suivants dans l'ordre suivant :
- le robinet à tournant sphérique de tube principal (15) comprenant la poignée (18),
- au moins un orifice d'alarme de flux (21) s'étendant dans un axe d'orifice d'alarme de flux (32) pour l'agencement d'une unité d'alarme de flux (22),
- un orifice de sortie de test (23) s'étendant dans un axe d'orifice de sortie de test (33) comprenant un robinet à tournant sphérique de sortie de test (24) avec un corps sphérique (27) et
- un orifice de mesure de pression (25) s'étendant dans un axe d'orifice de mesure de pression (34) pour l'agencement d'un manomètre (26), tandis que
- l'axe d'orifice d'alarme de flux (32) et l'axe de robinet (17) s'étendent parallèlement l'un à l'autre et
- l'axe d'orifice de sortie de test (33) et l'axe d'orifice de mesure de pression (34) s'étendent parallèlement l'un à l'autre, dans lequel
- les corps sphériques (27) des robinets à tournant sphérique (15, 24) sont reçus entre deux demi-boîtiers (28a, 28b, 29a, 29b).

2. Collecteur (1) selon la revendication 1,
**caractérisé en ce que**
l'axe d'orifice d'alarme de flux (32) et l'axe de robinet (17) s'étendent perpendiculairement à l'axe d'orifice de sortie de test (33) et l'axe d'orifice de mesure de pression (34).

3. Collecteur (1) selon la revendication 1 ou 2,
**caractérisé en ce que**
le corps de tube principal (10) est fabriqué par un processus de moulage, tandis qu'un joint de moulage (35) forme un plan de moulage, tandis que l'axe d'orifice de sortie de test (33) et l'axe d'orifice de mesure de pression (34) se trouvent dans le plan de moulage.

4. Collecteur (1) selon l'une des revendications 1 à 3,
**caractérisé en ce que**
un premier demi-boîtier (28a, 28b) est formé intégré dans le corps de tube principal (10) et un second demi-boîtier (29a, 29b) est formé intégré dans une partie de boîtier de robinet (30) qui est vissée sur le corps de tube principal (10) au moyen d'un raccord vissé (31).

5. Collecteur (1) selon la revendication 4,
**caractérisé en ce que**
les seconds demi-boîtiers (29a, 29b) forment des éléments de chapeau (38a, 38b) qui présentent des filets intérieurs (39a, 39b) pour relier une conduite à l'orifice d'entrée (11) et l'orifice de sortie (13).

6. Collecteur (1) selon l'une des revendications précédentes,
**caractérisé en ce que**
la poignée (18) présente une première branche (18.1) s'étendant perpendiculairement ou selon un angle par rapport à l'axe de robinet (17) et **en ce que** la poignée (18) présente une seconde branche (18.2) s'étendant perpendiculairement ou selon un angle par rapport à la première branche (18.1) et perpendiculairement ou selon un angle par rapport à l'axe de robinet (17).

7. Collecteur (1) selon la revendication 6,
**caractérisé en ce que**
la seconde branche (18.2) s'étend parallèlement à l'axe principal (16) quand le robinet à tournant sphérique de tube principal (15) est dans l'état ouvert.

8. Collecteur (1) selon la revendication 6 ou 7,
**caractérisé en ce que**
la première branche (18.1) s'étend perpendiculaire à l'axe principal (16) quand le robinet à tournant sphérique de tube principal (15) est dans l'état ouvert.

9. Collecteur (1) selon l'une des revendications précédentes,
**caractérisé en ce que**
les dimensions de la poignée (18) sont réalisées de telle manière que la poignée (18) ne s'étend pas au-delà de la première extrémité (12) du corps de tube principal (10), ni dans la position ouverte ni dans la position fermée du robinet à tournant sphérique de tube principal (15).

10. Collecteur (1) selon l'une des revendications 6 à 9,
**caractérisé en ce que**
un élément de verrouillage (19) peut être agencé déplaçable sur la première branche (18.1), tandis que, dans la position ouverte du robinet à tournant sphérique de tube principal (15), l'élément de verrouillage (19) est dans une position permettant d'interagir avec une crête (20) ou une encoche qui est agencée dans le contour extérieur du corps de tube principal (10) pour assurer le maintien du robinet à tournant sphérique de tube principal (15) dans la position ouverte.

11. Collecteur (1) selon l'une des revendications 6 à 10,
**caractérisé en ce que**
le robinet à tournant sphérique de tube principal (15) est agencé à une distance de la première extrémité (12) du corps de tube principal (10) et/ou la première branche (18.1) de la poignée (18) présente une longueur telle que la poignée (18) ne s'étend pas au-delà de la première extrémité (12) du corps de tube principal (10), ni dans l'état ouvert ni dans l'état fermé du robinet à tournant sphérique de tube principal (15).
